# EUROPEAN PATENT APPLICATION

(11) **EP 0 740 481 A2**
(43) Date of publication of application: **30.10.1996**
(21) Application number: 96106630.5
(22) Date of filing: 26.04.1996
(51) Int. Cl.: H04Q 7/18

(54) **Battery-saving method using different receiving modes**

(30) Priority: 28.04.1995 JP 105390/95
(71) Applicant: NEC CORPORATION, Tokyo (JP)
(72) Inventor: Kondo, Hisashi, c/o NEC Shizuoki Ltd., Kakegawa-shi, Shizuoka (JP)
(74) Representative: VOSSIUS & PARTNER

(57) **Abstract**

A selective calling receiver has a first battery-saving (BS) mode where the radio system (10) is intermittently supplied with power at intervals of a first time period, and a second BS mode where the radio system (10) is intermittently supplied with power at intervals of a second time period which is longer than the first time period. When the power is turned on, the receiver receives the selective calling signal in the first BS mode while sequentially selecting each of the predetermined frequency channels (CH₀-CH₁₁) in predetermined order until an acceptable signal is received through a selected channel within a first BS time period. When the acceptable signal is not received in the first BS mode during the first BS time period, the receiver receives the selective calling signal in the second BS mode in the same manner as the first BS mode until the acceptable signal is received through a selected channel within a second BS time period.

## Description

The present invention relates to a battery-powered radio receiver, and more particularly to a battery-saving method for a radio receiver used in a selective calling system having a plurality of channels.

A selective calling receiver which is also called a pager or a beeper has been widely used for various purposes. Since such a receiver is battery-powered and usually taken on the road, needless to say, it is better to work as long as possible without changing a battery. From this point of view, there have been proposed various battery-saving techniques.

According to a selective calling receiver disclosed in Japanese Patent Laid-open Publication No. 57-109437, when powered on or restarting synchronization establishment, power is supplied to a radio system during the time period required to receive a frame synchronization code several times. After the synchronization is established, power is supplied to the radio system only when a batch including a message addressed to the receiver itself is received. This method causes the possibility of receiving a frame synchronization code and the receiving sensibility to be improved while reducing its power consumption.

However, the above-mentioned method cannot achieve the expected battery-saving in a multichannel selective calling system such as ERMES (European Radio Message System). The multichannel selective calling system is designed to cope with a broader service area which is divided into a plurality of smaller radio zones each using a different frequency channel to selectively call a radio receiver. The radio receiver used in such a multichannel selective calling system, first of all, is required to search for the frequency channel used in the radio zone where the user is. Since the channel searching is performed by sweeping a predetermined frequency, power needs to be supplied to the radio system continuously until the target frequency channel is found and locked, that is, the synchronization is established. In other words, for the selective calling receiver employing the conventional battery-saving method, the intermittent receiving operation cannot be performed until the synchronization is established in the multichannel selective calling system, resulting in the increased power consumption of a battery.

The present invention has been proposed in order to overcome the aforementioned problems inevitably inherent in the prior art.

Accordingly, it is an object of the present invention to provide a receiving method which enables efficient battery-saving in a multichannel selective calling system.

It is another object of the present invention to provide a battery-powered radio receiver which can search for a target channel with reduced power consumption of the battery.

To achieve these ends and in accordance with one aspect of the present invention, a selective calling receiver has a first control mode and a second control mode. The first control mode is such that the radio system is intermittently supplied with power at intervals of a first time period, and the second control mode is such that the radio system is intermittently supplied with power at intervals of a second time period which is longer than the first time period.

When the power is turned on, the first control mode is first set in the receiver and receives the selective calling signal in the first control mode while sequentially selecting each of the predetermined frequency channels in predetermined order synchronizing with the first control mode until an acceptable signal is received through a selected channel within a first control time period. In other words, the predetermined frequency channels are swept at intervals of a first time period, that is, in synchronization with the first control mode.

When the acceptable signal is not received in the first control mode during the first control time period, a control mode of the receiver is changed from the first control mode to the second control mode. The receiver receives the selective calling signal in the second control mode while sequentially selecting each of the predetermined frequency channels in the predetermined order synchronizing with the second control mode until the acceptable signal is received through a selected channel within a second control time period. Each of the predetermined frequency channels is selected at least two times within a first control time period in the first control mode and at least one time within a second control time period in the second control mode.

Preferably, the predetermined order in which each of the predetermined channels is sequentially selected is such that the predetermined frequency channels are discretely swept in ascending order and then descending order of frequency. For instance, the even-numbered channels and the odd-numbered channels of the predetermined frequency channels are alternately swept with receiving the selective calling signal through each selected channel.

More specifically, the selective calling signal comprises a plurality of unit signals each comprising a synchronization signal, an address signal, and a data signal. The acceptable signal is a unit signal including the synchronization signal which is identical to a preset signal in the selective calling receiver. The first time period corresponds to a time period of one unit signal and the second time period corresponds to a time period of a plurality of unit signals.

According to the present invention, a selective calling receiver comprises a radio system module which includes a channel sweep controller for selecting a frequency channel from the predetermined frequency channels and a receiver for receiving a selective calling signal through a frequency channel selected by the channel sweep controller. The selective calling receiver further comprises a synchronization detector which detects an acceptable signal from the selective calling signal through the frequency channel selected, and a controller which controls the radio system module. More specifically, the selective calling signal is received in a first control mode until the acceptable signal is detected within a first control time period after power is turned on. The first control mode is such that the radio system module is intermittently supplied with power at intervals of a first time period and the frequency channel is sequentially selected one by one from the predetermined frequency channels in predetermined order at intervals of the first time period. When the acceptable signal is not detected during the first control time period, the selective calling signal is received in a second control mode until the acceptable signal is detected within a second control time period following the first control time period. The second control mode is such that the radio system module is intermittently supplied with power at intervals of a second time period and the frequency channel is sequentially selected one by one from the predetermined frequency channels in the predetermined order at intervals of the second time period which is longer than the first time period.

The above and other objects and advantages of the present invention will become apparent from the following detailed description when read in conjunction with the accompanying drawings.
FIG. 1 is a block diagram showing a selective calling receiver according to an embodiment of the present invention;
FIG. 2 is a functional block diagram showing a control system of the selective calling receiver according to the embodiment;
FIG. 3 is a diagram showing a signal format used in the embodiment;
FIG. 4 is a graph showing an example of a channel sweeping sequence according to the embodiment;
FIG. 5A is a timing chart showing a first battery-saving mode in the embodiment;
FIG. 5B is a timing chart showing a second battery-saving mode in the embodiment;
FIG. 6 is a flow chart showing a battery-saving mode switching method according to the embodiment;
FIG. 7 is a flow chart showing a channel searching method for battery-saving according to the channel sweeping sequence as shown in FIG. 4;
FIG. 8 is a flow chart showing a call processing at synchronization establishment; and
FIG. 9 is a timing chart showing another example of the second battery-saving mode.

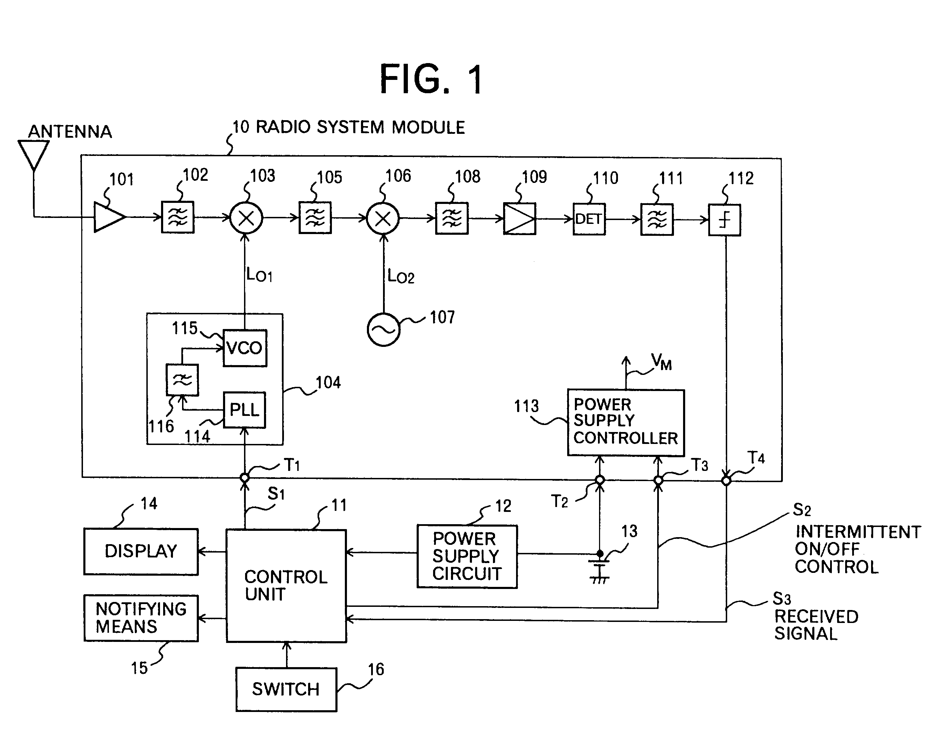

Referring to Fig. 1, there is shown a selective calling receiver in accordance with the present invention. A radio system module 10 receives a radio calling signal through an antenna under the control of a control unit 11. A power supply circuit 12 boosts the voltage of a battery 13 and supplies the boosted voltage to the control unit 11, a display 14, and a notifying means 15. The battery 13 also supplies power to the radio system module 10.

The radio system module 10, as known well, has a frequency converting section and a signal detecting section. As shown in Fig. 1, an RF amplifier 101 amplifies a radio signal received at the antenna, and the received signal is output to a mixer 103 through a RF filter 102 which removes undesired components from the received signal. The mixer 103 mixes the received signal with a first local oscillation signal Lo₁ to output a first IF (intermediate frequency) signal to an IF filter 105. The first local oscillation signal Lo₁ is generated by a PLL (phase-locked loop) oscillator 104 such as a frequency synthesizer whose output frequency is controlled by the control unit 11. The first IF signal is further converted to a second IF signal by a mixer 106 mixing the first IF signal with a second local oscillation signal Lo₂ which is generated by a second local oscillator 107. After passing through a filter 108, the second IF signal enters a limiter amplifier 109 which removes amplitude modulation noises from the second IF signal. Receiving the output of the limiter amplifier 109, a digital detector 110 detects a demodulated signal (here a digital signal) from the second IF signal. The digital signal is output from the detector 110 to a wave-shaping circuit 112 through a low-pass filter 111 which removes high-frequency noises from the digital signal. The wave-shaped signal is transferred as a receive signal from the wave-shaping circuit 112 to the control unit 11.

The PLL oscillator 104 is comprised of a PLLcontroller 114, a voltage-controlled oscillator 115, and a loop filter 116. The PLL controller 114 which includes a phase comparator controls the frequency of the first local oscillation signal Lo₁ according to a channel sweep control signal S1 received from the control unit 11 through a terminal T₁.

The radio system module 10 is further comprised of a power supply controller 113 which receives the battery voltage from the battery 13 through a terminal T₂ and performs the intermittent control according to an intermittent ON/OFF control signal S2 received from the control unit 11 through a terminal T₃. The power supply controller 113 supplies a predetermined power supply voltage Vm to the radio system circuits including the amplifiers and the PLL oscillator 104 in accordance with the intermittent ON/OFF control signal. The received signal S3 is transferred from the wave-shaping circuit 112 to the control unit 11 through a terminal T₄.

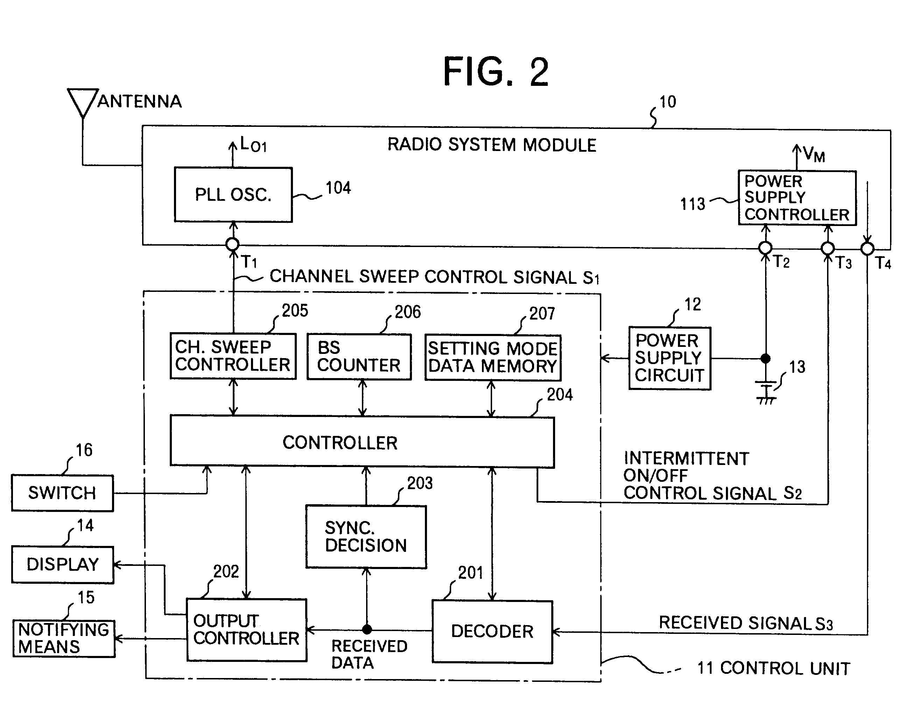

Referring to Fig. 2, the control unit 11 includes a decoder 201 which inputs the received signal S3 from the terminal T₄ of the radio system module 10 and decodes the received signal S3 into received data. The received data is transferred from the decoder 201 to an output controller 202 and a synchronization detector 203. The synchronization detector 203 determines whether the received data includes a predetermined data pattern and outputs a synchronization detection signal to a controller 204. When receiving the synchronization detection signal, the controller 204 instructs the output controller 202 to display a message of the received data on the display 14 and trigger the notifying means 15 such as a speaker and a vibrator. For simplicity, a read-only memory (ROM) for storing necessary programs, an EEPROM for storing the address number of its own, and other necessary circuits are not shown in Fig.2.

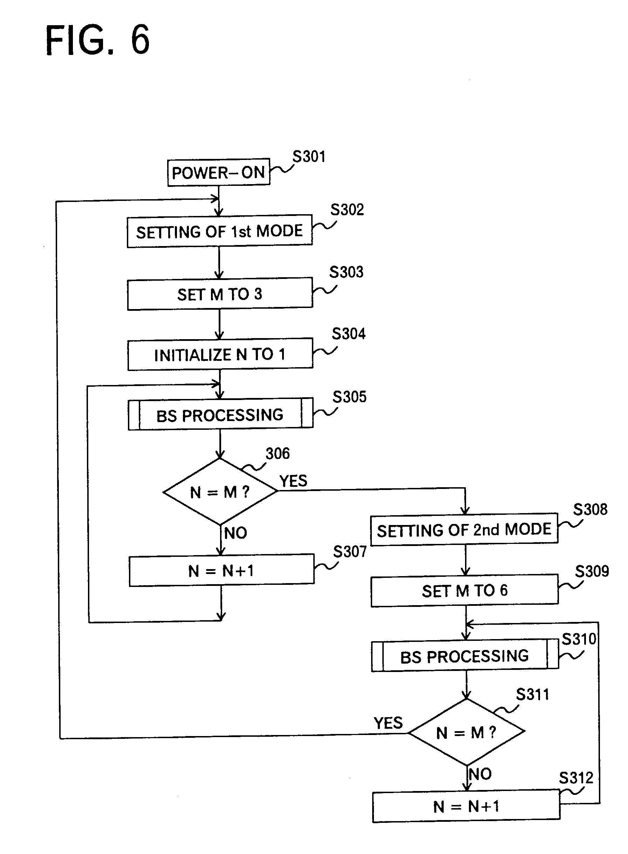

The controller 204, as described in detail later, performs the intermittent receiving control using a channel sweep controller 205, a battery-saving (BS) counter 206, and a setting mode data memory 207. The channel sweep controller 205 outputs the channel sweep control signal S1 to the PLL oscillator 104 under the intermittent receiving control. The BS counter 206 is used to store several kinds of variables and values for the intermittent receiving control. The setting mode data memory 207 stores setting data for a first BS mode and a second BS mode. The controller 204 uses the BS counter 206 and the setting mode data memory 207 to generate the intermittent ON/OFF control signal S2 and output to the power supply controller 113 of the radio system module 10. More specifically, when the switch 16 becomes on, the controller 204 reads the first BS mode setting data from the setting mode data memory 207 and generates the intermittent ON/OFF control signal S2 while instructing the channel sweep controller 205 to generate the channel sweep control signal S1 in accordance with the first BS mode. After the first BS mode operation is performed for a predetermined time period, the controller 204 reads the first BS mode setting data from the setting mode data memory 207 and shifts its control from the first BS mode to the second BS mode. More detailed description will be provided referring to Figs. 6-8.

### SELECTIVE CALLING SYSTEM

The selective calling receiver as shown in Figs. 1 and 2 is used in the multichannel selective calling system where the wide service area is divided into a plurality of radio zones each having a different frequency channel assigned thereto. Taking the ERMES paging system for example and assuming that it has 12 frequency channels, an operation of the embodiment will be described hereinafter.

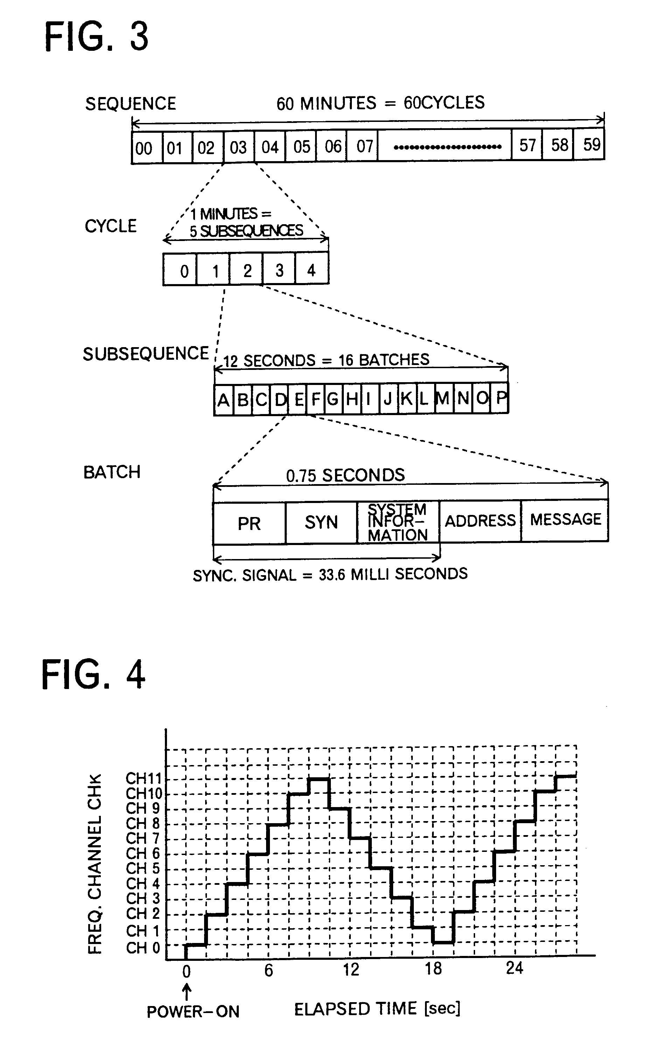

Referring to Fig. 3, the format of a selective calling signal conforming to the ERMES standards is comprised of a receiving unit of 0.75 seconds (referred to as a batch) consisting of a preamble signal (PR), a synchronization word signal (SYN), a system information signal, an address signal, and a message signal. The system information signal includes an identification code of a paging service provider to which the selective calling receiver belongs. In other words, all the receivers of this selective calling system are grouped into a plurality of subsystems each providing a different system information signal. Therefore, the PR signal, the SYN signal, and the system information signal are referred to as a synchronization signal. Since a total time length of the PR signal and the SYN signal is 9.6 milliseconds (msec) and a length of the system information signal is 24 msec, the synchronization signal is 33.6 msec length.

A subsequence of 12 seconds consists of 16 batches and a cycle of 1 minute consists of 5 subsequences. Finally, sixty cycles forms a sequence of 60 minutes. A selective calling signal addressed to a single receiver is transmitted at a rate of at least one cycle (1 minute) every 5 cycles (5 minutes).

### CHANNEL SWEEP SEQUENCE

As shown in Fig. 4, the selective calling system is assumed to have a full range of 12 frequency channels CH₀-CH₁₁. When a selective calling receiver is powered on, first of all, it is necessary to determine which frequency channel is available in its location. In order to search for an available frequency channel, the controller 204 instructs the channel sweep controller 205 to generate the channel sweep control signal S1 such that a receiving frequency varies in predetermined sequence in steps of one channel or two channels between the lowest frequency channel CH₀ and the highest frequency channel CH₁₁ every time slot. As described later, one time slot is 1.5 seconds in the first BS mode and 3 seconds in the second BS mode. Therefore, as shown in Fig. 4, all channels CH₀-CH₁₁ are swept in a predetermined time period, which is hereinafter referred to as all channel sweeping.

In parallel with the channel sweeping, the controller 204 outputs the intermittent ON/OFF control signal S2 to the power supply controller 113 of the radio system module 10. An intermittent time interval is changed depending on which BS mode is set, the first BS mode or the second BS mode. These BS modes will be described hereinafter.

### FIRST AND SECOND BS MODES

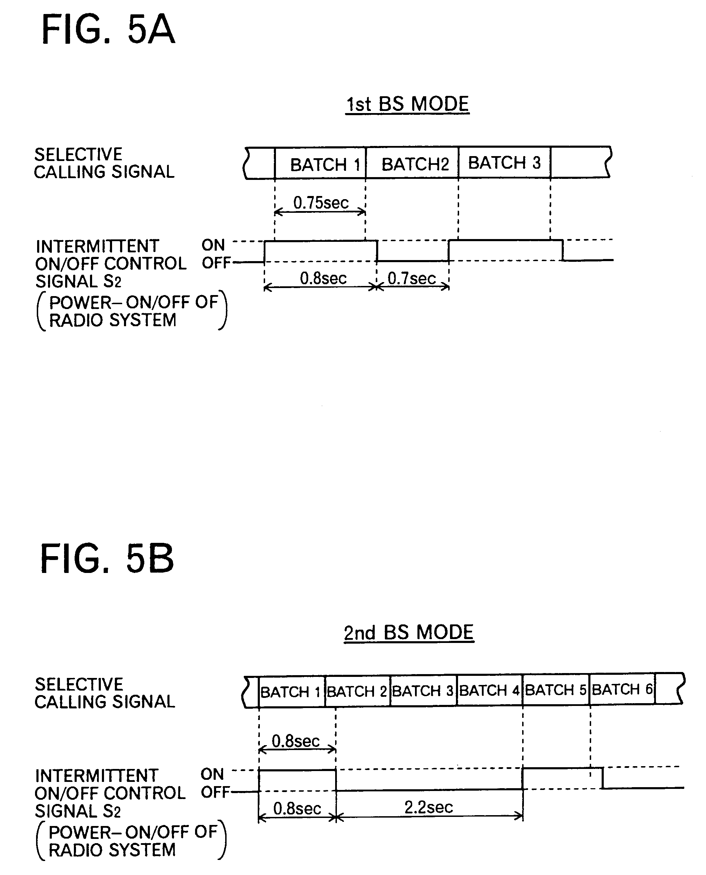

Referring to Fig. 5A, in the first BS mode, the intermittent ON/OFF control signal S2 is high during a time period of 0.8 sec and low during a time period of 0.7 sec in synchronization with the timing of batches. In other words, the radio system module 10 is supplied with power at intervals of one batch. The first BS mode ensures that the all channel sweeping is repeated at least two times for one minute or one cycle. The time period during which the radio system module 10 is supplied with power is set longer than the time period (0.75 seconds) of a batch by 50 msec, ensuring that the synchronization signal of 33.6 msec in a selective calling signal is received while the radio system module 10 is working. The intermittent control according to the first BS mode is performed a predetermined period (first BS period) after the power is turned on.

Referring to Fig. 5B, in the second BS mode, the intermittent ON/OFF control signal S2 is high during a time period of 0.8 sec and low during a time period of 2.2 sec in synchronization with the timing of batches. In other words, the radio system module 10 is supplied with power at intervals of three batches. The second BS mode ensures that the all channel sweeping is repeated at least one time for one minute or one cycle. The intermittent control according to the second BS mode is performed a predetermined period (second BS period) after the first BS mode is terminated with failed synchronization establishment. When the synchronization signal fails to be detected in the first BS mode, it is considered that the strength of a transmitting selective calling signal is too weak to be received or no selective calling signal is transmitted. Such a situation frequently wastes the battery power, resulting in reduced battery lifetime. Therefore, the intermittent receiving control is changed from the first BS mode to the second BS mode having a relatively long power-off period as shown in Fig. 5B.

### INTERMITTENT CHANNEL SEARCHING

Referring to Fig. 6, when power is turned on by a user pressing or flipping the switch 16 (step S301), the controller 204 reads the setting data of the first BS mode from the setting mode data memory 207 (step S302).

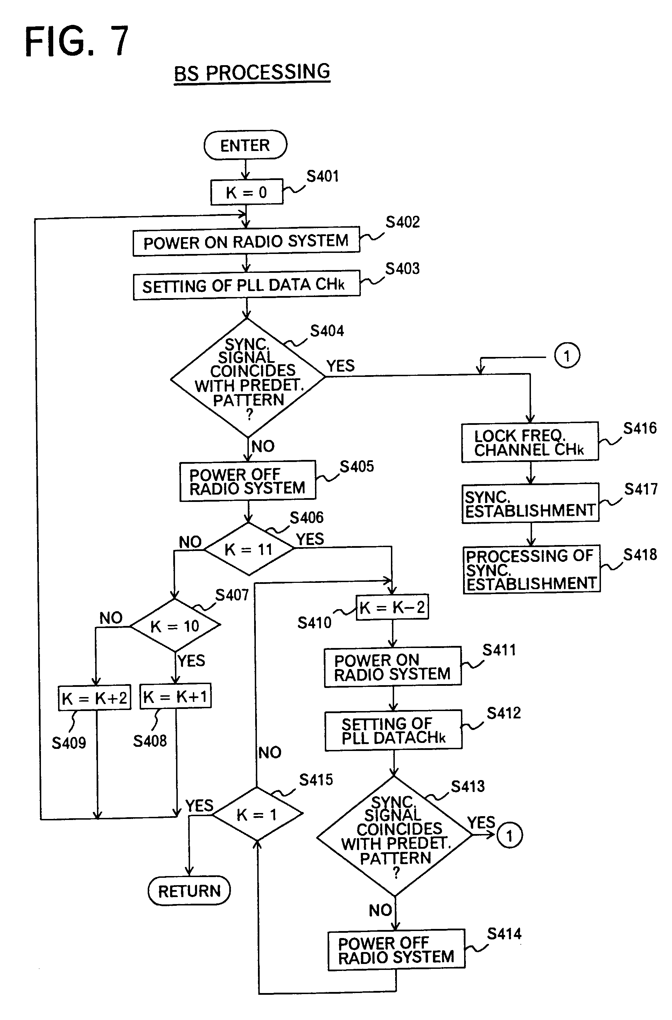

First, a limit value M is set to 3 (step S303). The limit value M determines how many times the channel searching in the full range between CH₀ and CH₁₁ is repeated as shown in Fig. 4, which corresponds to the first BS period. In this embodiment, since M=3, the all channel sweeping is repeated three times in accordance with the first BS mode as shown in Fig. 5A. After initializing a variable N to 1 (step S304), the controller 204 starts performing BS processing of the radio system module 10 such that the intermittent power ON/OFF control and the channel sweeping control are performed in the first BS mode (step S305). The BS processing will be described in detail referring to Fig. 7.

In the case where the BS processing (step S305) is terminated when the synchronization signal fails to be detected, the controller 204 checks whether the variable N reaches the limit value M (step S306). If not (NO in step S306), then the variable N is incremented (step S307) before returning to the BS processing step S305. The controller 204 repeats the steps S305-S307 until the variable N reaches the limit value M.

When the variable N reaches the limit value M (YES in step S306), the controller 204 reads the setting data of the second BS mode from the setting mode data memory 207 (step S308), and then the limit value M is set to 6 newly (step S309). Since the variable N is 3 in this case, the limit value M-3=3 corresponds to the second BS period. In other words, the all channel sweeping is repeated three times in accordance with the second BS mode as shown in Fig. 5B. After that, the controller 204 starts performing the BS processing of the radio system module 10 such that the intermittent power ON/OFF control and the channel sweeping control are performed in the second BS mode (step S310). In the case where the BS processing (step S310) is terminated when the synchronization signal fails to be detected, the controller 204 checks whether the variable N reaches the limit value M (step S311). If not (NO in step S311), then the variable N is incremented (step S312) before returning to the BS processing step S310. The controller 204 repeats the steps S310-S312 until the variable N reaches the limit value M.

When the variable N reaches the limit value M (YES in step S311), the controller 204 returns to the first BS mode data setting step S302. In cases where the selective calling receiver goes into a tunnel, a temporary radio disturbance occurs but disappears in a short while. Therefore, it is better to return to the first BS mode after a predetermined time period has elapsed in order to rapidly establish the synchronization.

In selecting the limit value M set in each of the steps S303 and S309, the lifetime of the battery is traded off against the time required to establish the synchronization. More specifically, the limit number M is set to a larger number in the step S303, resulting in the shorter lifetime of the battery but the more rapid synchronization establishment. Contrarily, the limit number M is set to a larger number in the step S309, resulting in the longer lifetime of the battery but the slower synchronization establishment, that is, the longer time required to establish the synchronization.

Referring to Fig. 7, the battery-saving (BS) processing is performed as follows. After initializing a variable K to 0 (step S401), the controller 204 makes the intermittent ON/OFF control signal S2 high, that is, the radio system module 10 is supplied with power (step S402) and instructs the channel sweep controller 205 to output the channel sweep control signal S1 to the PLL oscillator 104 according to the channel sweep sequence as shown in Fig. 4 (step S403). Since K=0, the PLL oscillator 104 is set at the frequency channel CH₀. The radio system module 10 receives a radio signal through the frequency channel CH₀ and outputs the received signal S3 to the decoder 201 of the control unit 11.

If the synchronization signal of the received data does not coincide with a predetermined data pattern, that is, the synchronization detector 203 does not detect the synchronization (NO in step S404), then the controller 204 makes the intermittent ON/OFF control signal S2 low, which means that no power is supplied to the radio system module 10 (step S405). Subsequently, the controller 204, referring to the BS counter 206, checks whether the variable K reaches 11 (step S406). When the variable K does not reach 11, the controller 204 further checks whether the variable K is 10 (step S407). When K=10, the variable K is incremented (step S408), and when K does not reach 10, the variable K is incremented by 2 (step S409). After that, the controller 204 returns to the power-on step S402. These steps S402-S409 are repeated until the variable K reaches 11. In this manner, the half channel sweeping (CH₀, CH₂, CH₄, CH₆, CH₈, CH₁₀, and CH₁₁) is performed as shown in Fig. 4.

When the variable K reaches 11, the controller 204 performs the remaining half channel sweeping. First, the variable K is decremented by 2 (step S410) and then the controller 204 makes the intermittent ON/OFF control signal S2 high, that is, the radio system module 10 is supplied with power (step S411) and instructs the channel sweep controller 205 to output the channel sweep control signal S1 to the PLL oscillator 104 according to the channel sweep sequence as shown in Fig. 4 (step S412). Since K=9, the PLL oscillator 104 is set at the frequency channel CH₉. The radio system module 10 receives a radio signal through the frequency channel CH₉ and outputs the received signal S3 to the decoder 201 of the control unit 11. If the synchronization signal of the received data does not coincide with a predetermined data pattern, that is, the synchronization detector 203 does not detect the synchronization (NO in step S413), then the controller 204 makes the intermittent ON/OFF control signal S2 low, which means that no power is supplied to the radio system module 10 (step S414). Subsequently, the controller 204, referring to the BS counter 206, checks whether the variable K reaches 1 (step S415). When K does not reach 1, the controller 204 returns to the power-on step S410 where the variable K is further decremented by 2. These steps S410-S415 are repeated until the variable K reaches 1. In this manner, the remaining half channel sweeping (CH₉, CH₇, CH₅, CH₃, and CH₁) is performed as shown in Fig. 4. And when K reaches 1 (YES in step S4415), the BS processing step is ended and returns to the step S305 or S310 of the main routine as shown in Fig. 6.

If the synchronization signal of the received data coincides with a predetermined data pattern, that is, the synchronization detector 203 detects the synchronization (YES in step S404 or S413), then the controller 204 instructs the channel sweep controller 205 to lock a receiving channel at the present frequency channel CHₖ at which the synchronization is detected (step S416), and the synchronization is established (step S417). When the synchronization has been established, the controller 204 enters into the call processing routine (step S418).

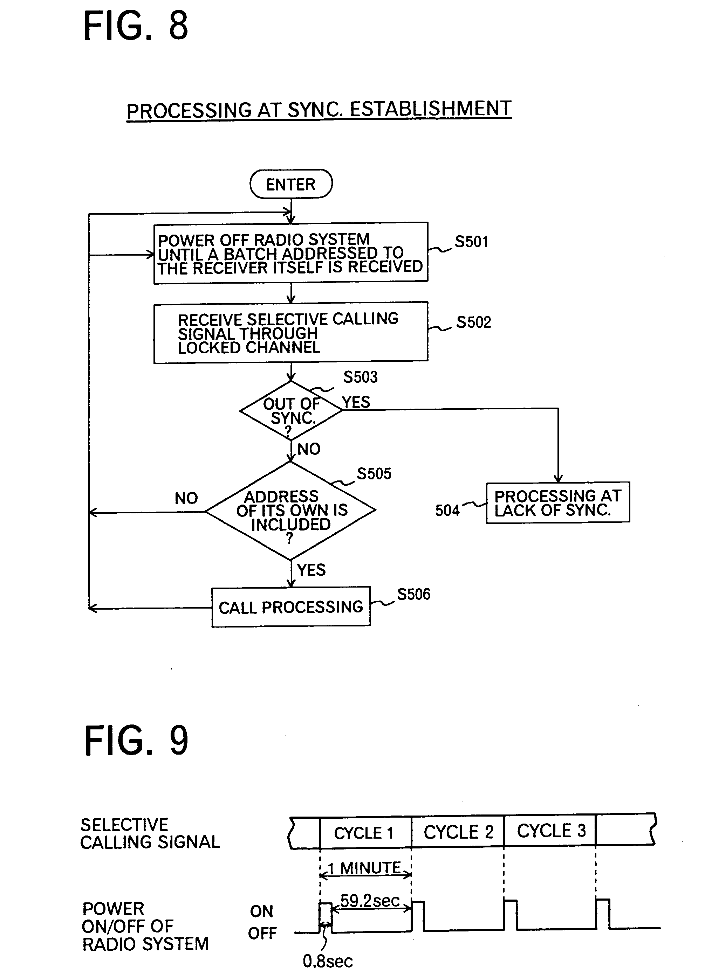

Referring to Fig. 8, when the synchronization has been established, the timing of receiving a batch addressed to the receiver itself is determined. Therefore, the controller 204 makes the intermittent ON/OFF control signal S2 high when the batch addressed to the receiver itself receives and otherwise low, that is, the radio system module 10 is powered off (step S501). Receiving a selective calling signal through the locked frequency channel CHₖ(step S502), the controller 204 checks whether the received data is out of synchronization (step S503). If out of synchronization (YES in step S503), the controller 204 returns to the power-on step S301 as a recovery process at lack of synchronization (step S504). If the synchronization is kept (NO in step S503), the controller 204 determines whether the address of its own is included in the received data (step S505). When the address of its own is not included (NO in step S505), the controller 204 makes the intermittent ON/OFF control signal S2 low, causing the radio system module 10 to be powered off until a next batch addressed to the receiver itself is received (step S501). When the address of its own is included (YES in step S505), the controller 204 performs the call processing such that the notifying means 15 such as a speaker is triggered and, if a message is included in the received data, the message is displayed on the display 14. After that, the controller 204 returns to the step S501.

### ANOTHER EXAMPLE OF 2nd BS MODE

Fig. 9 shows another example of the power-ON/OFF timing of the second BS mode at the time when the first BS mode is terminated with the synchronization signal failing to be detected (YES in step S306). In this second BS mode, the intermittent ON/OFF control signal S2 is high during a time period of 0.8 sec and low during a time period of 59.2 sec in synchronization with the timing of cycles. In other words, the radio system module 10 is supplied with power at intervals of a cycle of one minute. The channel sweeping mode like this is capable of searching for an available channel with reduced battery lifetime. However, the time required to find the available channel is relatively long. Therefore, the ratio of the power-off period to the power-on period in the second BS mode may be selected according to user's convenience.

## Claims

1. A power-saving method of a selective calling receiver which has a radio system (10) for receiving a selective calling signal through one of a plurality of predetermined channels (CH₀-CH₁₁), the method comprising the steps of:
preparing a first control mode and a second control mode, the first control mode being such that the radio system is intermittently supplied with power at intervals of a first time period, and the second control mode being such that the radio system is intermittently supplied with power at intervals of a second time period which is longer than the first time period;
setting the first control mode at power-on, the selective calling signal being received in the first control mode while sequentially selecting each of the predetermined frequency channels in predetermined order synchronizing with the first control mode until an acceptable siqnal is received through a selected channel within a first control time period (S301-S307); and
changing from the first control mode to the second control mode when the acceptable signal is not received in the first control mode during the first control time period, the selective calling signal being received in the second control mode while sequentially selecting each of the predetermined frequency channels in the predetermined order synchronizing with the second control mode until the acceptable signal is received through a selected channel within a second control time period (S308-S312).

2. A receiving method of a selective calling receiver which has a radio system (10) for receiving a selective calling signal through one of a plurality of predetermined frequency channels (CH₀-CH₁₁), the method comprising the steps of:
receiving the selective calling signal in a first control mode while sequentially selecting each of the predetermined frequency channels in predetermined order synchronizing with the first control mode until an acceptable signal is received through a selected frequency channel within a first control time period after power is tuned on, the first control mode being such that the radio system is intermittently supplied with power at intervals of a first time period; and
receiving the selective calling signal in a second control mode when the acceptable signal is not received in the first control mode during the first control time period while sequentially selecting each of the predetermined frequency channels in the predetermined order synchronizing with the second control mode until the acceptable signal is received through a selected frequency channel within a second control time period following the first control time period, the second control mode being such that the radio system is intermittently supplied with power at intervals of a second time period which is longer than the first time period.

3. A method for determining a frequency channel in a selective calling receiver which has a radio system (10) for receiving a selective calling signal through one of a plurality of predetermined frequency channels (CH₀-CH₁₁), the method comprising the steps of:
a) setting a first control mode at power-on, the first control mode being such that the radio system is intermittently supplied with power at intervals of a first time period (S302);
b) sequentially selecting a frequency channel from the predetermined frequency channels in predetermined order according to the first control mode (S401-S415);
c) receiving the selective calling signal through the frequency channel selected synchronizing with the first control mode (S402-S405);
d) checking whether the selective calling signal received through the frequency channel selected includes an acceptable signal (S404, S413);
e) repeating the steps (b) to (d) up to first predetermined times according to the first control mode until the acceptable signal is received through the frequency channel selected (S401-S415);
f) setting a second control mode when the acceptable signal is not received in the first control mode, the second control mode being such that the radio system is intermittently supplied with power at intervals of a second time period longer than the first time period (S308);
g) sequentially selecting a frequency channel from the predetermined frequency channels in the predetermined order according to the second control mode (S401-S415);
h) receiving the selective calling signal through the frequency channel selected synchronizing with the second control mode (S402-S405);
i) checking whether the selective calling signal received through the frequency channel selected includes the acceptable signal(S404, S413);
j) repeating the steps (g) to (i) up to second predetermined times according to the second control mode until the acceptable signal is received through the frequency channel selected (S401-S415); and
k) determining the frequency channel selected as a receiving channel when the acceptable signal is received through the frequency channel in either the step (d) or (i) (S416, S417).

4. A selective calling receiver comprising:
a radio system module (10) comprising:
channel selecting means (104) for selecting a frequency channel from a plurality of predetermined frequency channels(CH₀-CH₁₁); and
receiving means (101-113) for receiving a selective calling signal through a frequency channel selected by the channel selecting means,
the selective calling receiver further comprising:
detecting means (203) for detecting an acceptable signal from the selective calling signal through the frequency channel selected; and
control means (203-207) for controlling the radio system module such that the selective calling signal is received in a first control mode until the acceptable signal is detected within a first control time period after power is turned on, the first control mode being such that the radio system module is intermittently supplied with power at intervals of a first time period and the frequency channel is sequentially selected one by one from the predetermined frequency channels in predetermined order at intervals of the first time period, and such that the selective calling signal is received in a second control mode when the acceptable signal is not detected during the first control time period until the acceptable signal is detected within a second control time period following the first control time period, the second control mode being such that the radio system module is intermittently supplied with power at intervals of a second time period and the frequency channel is sequentially selected one by one from the predetermined frequency channels in the predetermined order at intervals of the second time period which is longer than the first time period.

5. The method according to any of claims 1-4, wherein:
the first control mode is such that the radio system is supplied with power during a predetermined power-on time period and is not supplied with power during a first power-off time period; and
the second control mode is such that the radio system is supplied with power during the predetermined power-on time period and is not supplied with power during a second power-off time period which is longer than the first power-off time period.

6. The method according to claim 5, wherein the selective calling signal is received during the predetermined power-on time period through the selected channel which is sequentially changed over the predetermined frequency channels in synchronization with the predetermined power-on time period.

7. The method according to any of claims 1-6, wherein the predetermined order in which each of the predetermined channels is sequentially selected is such that the predetermined frequency channels are discretely swept in ascending order and then descending order of frequency.

8. The method according to claim 7, wherein even-numbered channels and odd-numbered channels of the predetermined frequency channels are alternately swept.

9. The method according to any of claims 1-8, wherein the selective calling signal comprises a plurality of unit signals each comprising a synchronization signal, an address signal, and a data signal.

10. The method according to claim 9, wherein the acceptable signal is a unit signal including the synchronization signal which is identical to a preset signal in the selective calling receiver.

11. The method according to claim 9 or 10, wherein the first time period corresponds to a time period of one unit signal and the second time period corresponds to a time period of a plurality of unit signals.

12. The method according to any of claims 9-11, wherein:
the first control mode is such that the radio system is supplied with power during a predetermined power-on time period and is not supplied with power during a first power-off time period, the predetermined power-on time period synchronizing with the unit signal; and
the second control mode is such that the radio system is supplied with power during the predetermined power-on time period and is not supplied with power during a second power-off time period which is longer than the first power-off time period.

13. The method according to claim 12, wherein the first power-off time period corresponds to a time period of one unit signal and the second power-off time period corresponds to a time period of a plurality of unit signals.

14. The method according to any of claims 1-13, wherein each of the predetermined frequency channels is selected at least two times within a first control time period in the first control mode and at least one time within a second control time period in the second control mode.

15. The method according to any of claims 1-14, wherein the selective calling signal conforms to ERMES (European Radio Message System) specifications.

16. The method according to claim 15, wherein the selective calling signal comprises a sequence comprising sixty cycles each comprising five subsequences each comprising sixteen batches each comprising a synchronization signal, an address signal, and a data signal.

17. The method according to claim 16, wherein the first time period corresponds to a time period of one batch and the second time period corresponds to a time period of three batches.

18. The method according to any of claims 1-17, wherein the first control mode is set again when the acceptable signal is not received in the second control mode during the second control time period.
